# EUROPÄISCHE PATENTANMELDUNG

(11) **EP 1 370 054 A1**
(43) Veröffentlichungstag der Anmeldung: **10.12.2003**
(21) Anmeldenummer: 03090132.6
(22) Anmeldetag: 29.04.2003
(51) Int. Cl.: H04M 3/42, B61L 3/22

(54) **Verfahren zur Datenübertragung**

(30) Priorität: 06.06.2002 DE 10225547
(71) Anmelder: SIEMENS AKTIENGESELLSCHAFT, 80333 München (DE)
(72) Erfinder: Kendelbacher, Detlef, 13129 Berlin (DE); Pliquett, Volker, 12621 Berlin-Kaulsdorf (DE); Stein, Fabrice, 12621 Berlin (DE)

(57) **Zusammenfassung**

Die Erfindung betrifft ein Verfahren zur Datenübertragung über ein Funknetz (1) und ein mit dem Funknetz (1) über ein Gateway (2) verbundenes Backbonenetz (5), wobei mobile und ortsfeste Teilnehmer (6 und 4) Daten über das Funknetz (1) und das Backbonenetz (5) übertragen. Um die Flexibilität der Übertragungsmedien und Übertragungsprotokolle zu verbessern, ist vorgesehen, dass die Übertragung im Funknetz (1) konform zu einem vorgegebenen Protokollstandard erfolgt und die verwendeten Übertragungsprotokollstacks im Funknetz (1) und im Backbonenetz (5) unterschiedlich sein können.

## Beschreibung

Die Erfindung betrifft ein Verfahren zur Datenübertragung gemäß dem Oberbegriff des Anspruches 1.

Nachfolgend wird im Wesentlichen auf die Optimierung der Kommunikationsstrukturen im European Train Control System (ETCS) Bezug genommen, ohne dass das Verfahren auf diese Anwendung beschränkt ist.

Das European Train Control System (ETCS) ist ein europäisch standardisiertes System zur Zugsicherung und Zugsteuerung bei den Eisenbahnen. Es definiert die Funktionen und Schnittstellen für ein internationales Zugsicherungssystem auf der Grundlage des digitalen Mobilfunkstandards GSM. Ein Hauptziel dieses Systems besteht in der Interoperabilität des Zugverkehrs, so dass mit ETCS ausgerüstete Züge in den europäischen Ländern grenzüberschreitend verkehren können. Das ETCS sichert dabei die Zugfahrten automatisch und ermöglicht Fahrten mit hohen Geschwindigkeiten.

Für die Kommunikation zwischen ETSC-Fahrzeugen und ETCS-Streckenzentralen wurde die EURORADIO-Norm definiert, welche die für den Bahnbetrieb geeigneten Übertragungsprotokolle und Sicherungsverfahren zur Datenübermittlung in den unterlagerten Netzen GSM-R und IDSN festlegt. Die exakte Einhaltung des EURORADIO-Standards ist eine der Grundlagen für die Interoperabilität des ETCS-Systems. Zugleich wurde mit der Norm auch eine Grundlage für die Datenübertragung von weiteren Bahndiensten geschaffen.

Die europäischen Bahnen stehen unter dem Druck, ihre Effektivität zu steigern und die Kostensituation zu verbessern. Ein Mittel dazu ist die Einführung von GSM-Netzen für Bahnanwendungen. Der Mobilfunk im Bahnbereich zielt dabei nicht nur auf die Anwendung bei Zugsicherungssystemen im Hochgeschwindigkeitsbereich und auf Regionalstrecken. Ein weiteres Ziel der Bahnen besteht darin, mit dem GSM-Mobilfunk verschiedene bestehende analoge Übertagungssysteme für Daten- und Sprachdienste abzulösen und diese Dienste auf einen einheitlichen Übertragungsstandard abzubilden. Für diese Diensteintegration ist neben der Umsetzung der europäischen Normen auch die Migration bestehender Bahnnetze und Bahndienste in die neuen Kommunikationsstrukturen ein wesentlicher Aspekt.

Im ETCS steuern Streckenzentralen die in einem festgelegten Streckenbereich fahrenden Züge. Die Züge kommunizieren permanent mit der sie führenden Streckenzentrale während der Zeit, in der sie den festgelegten Streckenbereich durchfahren. An der Grenze zweier benachbarter Streckenzentralen erfolgt ein Wechsel der verantwortlich führenden Streckenzentrale. Damit verbunden ist die Übergabe der Zugsteuerung von einer Streckenzentrale an die benachbarte Streckenzentrale - Nachbarzentralen-Übergang. Dieser Nachbarzentralen-Übergang bedingt auch einen Wechsel der Kommunikationsverbindung. Um eine lückenlose Führung zu gewährleisten, muss das Fahrzeug eine neue signaltechnisch gesicherte Verbindung zur nächsten Streckenzentrale aufbauen, bevor die Verbindung zur bisher führenden Streckenzentrale beendet werden kann. Das heißt, dass während des Nachbarzentralen-Übergangs zeitweise zwei gesicherte Verbindungen zu zwei Streckenzentralen benötigt werden.

Für die Kommunikation zwischen einer ETCS-Streckenzentrale und einem ETCS-Fahrzeug wird im GSM-R Netz ein Funkkanal mit 4,8 kBit/s und im ISDN-Netz ein Basiskanal mit 64 kBit/s Übertragungskapazität benutzt. Die ETCS-Streckenzentralen sind mit ISDN-Primärmultiplexanschlüssen mit n*30 Basiskanälen an das GSM-R-Netz angeschlossen. Für die Datenübertragung werden ausschließlich EURORADIO-Protokollstacks benutzt.

In der gattungsbildenden DE 197 21 246 A1 wurde vorgeschlagen, Gateways für die Koordinierung der Umschaltung zwischen ETCS-Streckenzentralen einzusetzen. Damit kann die Einrichtung einer neuen physikalischen Verbindung auf die Umschaltung im Festnetz beschränkt werden und die bestehende Funkverbindung zwischen Fahrzeug und Gateway auch bei Nachbarzentralen-Übergängen kontinuierlich bestehen bleiben. Zudem können mit diesem Verfahren zentrale und dezentrale Bahndienste über das Gateway kommunikationstechnisch koordiniert und Mobilfunkgeräte eingespart werden.

Der Erfindung liegt die Aufgabe zugrund, ein Verfahren der gattungsgemäßen Art hinsichtlich Flexibilität der eingesetzten Übertragungsmedien und Übertragungsprotokolle zu verbessern, wobei dennoch die an den Gesamtübertragungsweg gestellten Anforderungen hinsichtlich Protokollkonformität und Leistungsfähigkeit erfüllt werden.

Die Aufgabe wird mit den kennzeichnenden Merkmalen des Anspruchs 1 gelöst.

Das Verfahren besteht in der Einführung eines qualitativ neuen Übertragungsabschnittes, insbesondere für die ETCS-Kommunikation. Der neue Übertragungsabschnitt ist protokolltechnisch entkoppelt von der EURORADIO-Norm und bietet dadurch Flexibilität der Übertragungsmedien und Übertragungsprotₒkₒlle bei ausreichender Protokollkonformität und Leistungsfähigkeit.

Der qualitativ neue Übertragungsabschnitt in der ETCS-Kommunikation besteht in der Verwendung eines Backbonenetzes mit angepassten Übertragungsprotokollstacks in den ortsfesten Endteilnehmern, z. B. ETCS-Streckenzentralen und Gateways. Mit der Einführung dieses Übertragungsabschnittes ergibt sich eine Veränderung in der Übertragungsprotokollstruktur des ETCS unter Einhaltung der Euroradio-Konformität im Funkkanal.

Das einsetzbare Backbonenetz und die im Backbonenetz ablaufenden Standardprotokolle unterliegen nicht der EURORADIO-Norm. Da bei den Bahnen Backbonenetze meistens vorhanden sind, kann deren Nutzung im Zusammenhang mit der Einführung des ETCS erhebliche Einsparungen an Investitionskosten bedeuten. S2M-Anschlüsse sind nur im Gateway nötig. Die S2M-Anschlüsse in den Streckenzentralen können gegen preiswerte LAN oder S0-Anschlüss ersetzt werden. Die Bereitstellungskosten für Netzanschlüsse und Netzkarten sinken. Mit der Umsetzung von GSM-R in das Backbone-Netz wird die Übertagungskapazität im Festnetz wesentlich besser ausgenutzt. Durch Vermeidung von über dimensionierten Kommunikationsressourcen sinken die Übertragungskosten.

Vorteilhafte Weiterbildungen und Ausführungsformen ergeben sich aus den Unteransprüchen. Nachfolgend wird die Erfindung anhand figürlicher Darstellungen näher erläutert.
Es zeigen:
- Figur 1: eine ETCS-Kommunikationsstruktur,
- Figur 2: ein Routing für Kommunikationsadressen und die
- Figuren 3 bis 5: verschiedene Protokollstacks.

Die Züge kommunizieren über GSM-R 1 immer mit einem ortsfesten Gateway 2. Das Gateway 2 fungiert als zentraler Kommunikationsknoten und kann an beliebiger Stelle im Netz platziert werden. Um Leitungswege zu sparen, bietet sich beispielsweise eine Platzierung in der Nähe der GSM-R-Vermittlung (MSC, Mobile Switching Centre) 3 an. Das Gateway 2 vermittelt Kanäle zu den ETCS-Streckenzentralen 4 über das Backbone-Netz 5. Das verwendete Backbone-Netz 5 und die Kopplungsvarianten zwischen dem Gateway 2 und den ETCS-Streckenzentralen 4 sind variabel. Kommunikationsverbindungen bestehen in dieser Struktur immer aus zwei Teilabschnitten. Ein Teilabschnitt, der Funkabschnitt, führt von einem mobilen Teilnehmer 6 über das GSM-R-Netz 1 bis zum Gateway 2. Ein weiterer Teilabschnitt, der Festnetzabschnitt erstreckt sich vom Gateway 2 über das Backbone-Netz 5 bis zum ortsfesten Entteilnehmer. Der ortsfeste Endteilnehmer kann eine ETCS-Streckenzentrale 4 oder eine andere Bahnanwendung sein. Im Funkabschnitt erfolgt die Datenübertragung mittels der normierten EURORADIO-Protokolle. Im Festnetzabschnitt kann die Datenübertragung mit unterschiedlichen Varianten von Übertragungsprotokollen erfolgen. Die Protokollstacks für die Datenübertragung im Funkabschnitt und im Festnetzabschnitt werden durch das Gateway 2 vollständig entkoppelt.

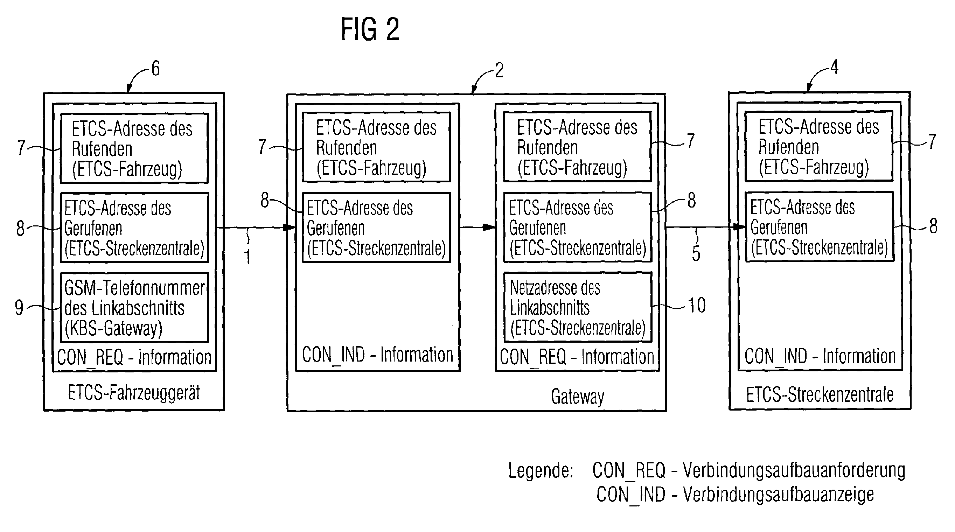

Das Prinzip der Adressierung ist in Figur 2 dargestellt. Aufgrund der erweiterten Kommunikationsstruktur mit Gatewaytechnoiogie ist ein zweistufiges Adressierungsverfahren erforderlich. In der ersten Stufe erfolgt die Ermittlung der Kommunikationsadresse für den ersten Teilabschnitt. Für die Ermittlung dieser Kommunikationsadresse ist der Endteilnehmer zuständig, der die Verbindung einrichtet, entweder der mobile 6 oder der ortsfeste Teilnehmer 4. Der erste Teilabschnitt kann sowohl ein Funkabschnitt, als auch ein Festnetzabschnitt sein. In der zweiten Stufe erfolgt die Ermittlung der Kommunikationsadresse für den zweiten Teilabschnitt. Für die Ermittlung dieser Kommunikationsadresse ist das Gateway 2 zuständig, welches deswegen über eine entsprechende Datenbasis verfügen muss. Im Gateway 2 erfolgt das Routing der Adressen.

Die erfindungsgemäße Kommunikationsstruktur unterstützt die Interoperabilitätsanforderungen, da alle ETCS-Fahrzeuge 6 mit dem standardkonformen EURORADIO-Protokoll kommunizieren und die ETCS-Sicherungsverfahren für die Datenübertragung im offenen Netz Ende zu Ende angewendet werden.

Am Beispiel eines Verbindungsaufbaus von einem rufenden ETCS-Fahrzeug 6 zu einer gerufenen ETCS-Streckenzentrale 4 wird nachfolgend das Adressenprinzip näher erläutert.

### 1. Teilabschnitt:

Im ETCS-Fahrzeug 6 werden die ETCS-Adresse 7 des rufenden Fahrzeugs 6, die ETCS-Adresse 8 der gerufenen Streckenzentrale 4 und die GSM-R-Telefonnummer 9 des Funkabschnittes zum Gateway 2 ermittelt. Diese Daten sind im ETCS-Fahrzeug 6 projektiert bzw. werden bei der Fahrt aus den im Gleis verlegten Balisen - elektronische Kilometersteine - ausgelesen. Mit diesen Daten wird die Adresse für den Funkabschnitt gemäß EURORADIO-Norm gebildet. Mittels der Netzrufnummer des Gateways 2 wird über das GSM-R-Netz 1 eine Funkverbindung vom ETCS-Fahrzeug 6 zum Gateway 2 eingerichtet.

### 2. Teilabschnitt:

Im Gateway 2 wird der Ruf weiterbearbeitet, indem mit Hilfe der übertragenen ETCS-Adressen 7 und 8 des Rufenden und Gerufenen die Netzrufnummer 10 des zweiten Teilabschnittes zur ETCS-Streckenzentrale 4 aus der Datenbasis des Gateways 2 ermittelt wird. Die Adressierung mit den Adressen 7 und 8 des ETCS-Fahrzeuges 6, der ETCS-Streckenzentrale 4 und der Netzrufnummer 10 der ETCS-Streckenzentrale 4 erfolgt auch im zweiten Teilabschnitt konform zur EURORADIO-Norm. Mittels der Netzrufnummer 10 wird durch das Gateway 2 eine Backbone-Netz-3, verbindung 5 zur ETCS-Streckenzentrale 4 eingerichtet. Für den in der ETCS-Streckenzentrale 4 ankommenden Ruf mit den ETCS-Adressen 7 und 8 des Fahrzeuges 6 und der ETCS-Streckenzentrale 4 ist das Gateway 2 transparent. Das Gateway 2 ist ebenfalls transparent für die Ende zu Ende wirkenden Sicherungsschichten des ETCS, z. B. Authentifizierungsdialog.

Bei Nachbarzentralen-Übergängen wird eine zweite Verbindung vom ETCS-Fahrzeug zur ETCS-Nachbar-Streckenzentrale aufgebaut. Der Abschnitt vom ETCS-Fahrzeug bis zum Gateway kann dabei als zweiter logischer Kanal im bestehenden GSM-R-Funkkanal aufgebaut werden. Der Abschnitt vom Gateway bis zur ETCS-Nachbar-Streckenzentrale wird als zweiter physikalischer Link im Backbone-Netz etabliert. Der Funkkanal zum Fahrzeug kann kontinuierlich bestehen bleiben und in der Übergangsphase multiplex für zwei Verbindungen zu zwei ETCS-Strecken zentralen benutzt werden. Dieses Verhalten ist konform zur EURORADIO-Norm.

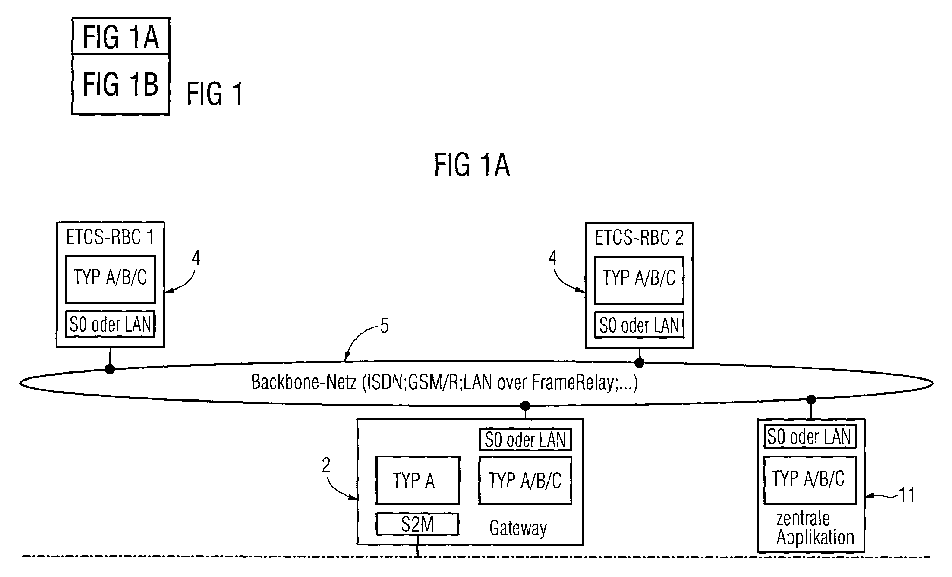

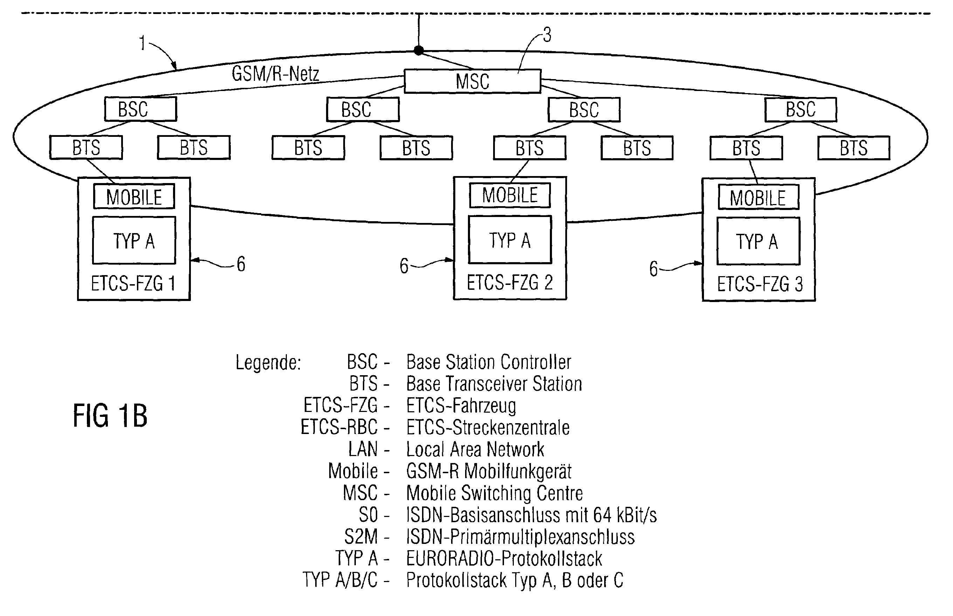

Zentrale Applikationen 11, Figur 1, können in dieser Kommunikationsarchitektur unabhängig von den ETCS-Streckenzentralen 4 mit den Fahrzeugen 6 kommunizieren. Falls keine Verbindung zu einem Fahrzeug 6 besteht, richtet die zentrale Applikation 11 eine neue physische Verbindung zum ETCS-Fahrzeug 6 ein. Diese Verbindung besteht auch aus zwei Teilabschnitten - Festnetzabschnitt und Funkabschnitt - und wird über das Gateway 2 geroutet. Die Adressierung erfolgt mittels ETCS-Adresse des Fahrzeuges 6. Falls im Funkabschnitt zum gerufenen Fahrzeug 6 schon eine Funkverbindung 1 besteht, kann durch das Gateway 2 eine weitere logische Multiplexverbindung auf dem bestehenden Funkkanal eingerichtet werden. Das EURORAD1O-Kommunikationsprotokoll sorgt in diesem Fall für die prioritätsgesteuerte Datenübertragung, bei der die Zugsteuerungsdaten bevorzugt bearbeitet werden. Mit dem Multiplex-Zugang von zentralen Applikationen 11 zu Fahrzeugen 6 eröffnen sich neue Chancen zur Prozessverbesserung bei den Bahnen. Beispielsweise können über einen zentralen Datendienst die auf den Fahrzeugen 6 anfallenden Diagnosedaten automatisiert abgerufen und ausgewertet werden. Freie Funkkanalkapazitäten können benutzt werden, um z. B. Statusmeldungen zu übermitteln oder Fahrplandaten zu synchronisieren. Die Qualität der Dienstgüte der unterlagerten GSM-R-Infrastruktur kann zentral und automatisch erfasst und zugeordnet werden ohne zusätzlichen dezentralen Wartungsaufwand und ohne zusätzlichen Bedarf an Kommunikationsressourcen.

Für die Verbindung zwischen dem Gateway 2 und den festnetzseitigen Endteilnehmern, z. B. ETCS-Zentralen 4, können Übertragungsprotokollstacks verschiedener Ausprägung eingesetzt werden. Die Protokollauswahl hängt unter anderem vom verfügbaren Backbone-Netzwerk 5 ab. Als Protokollstacks kommen beispielsweise in Frage:

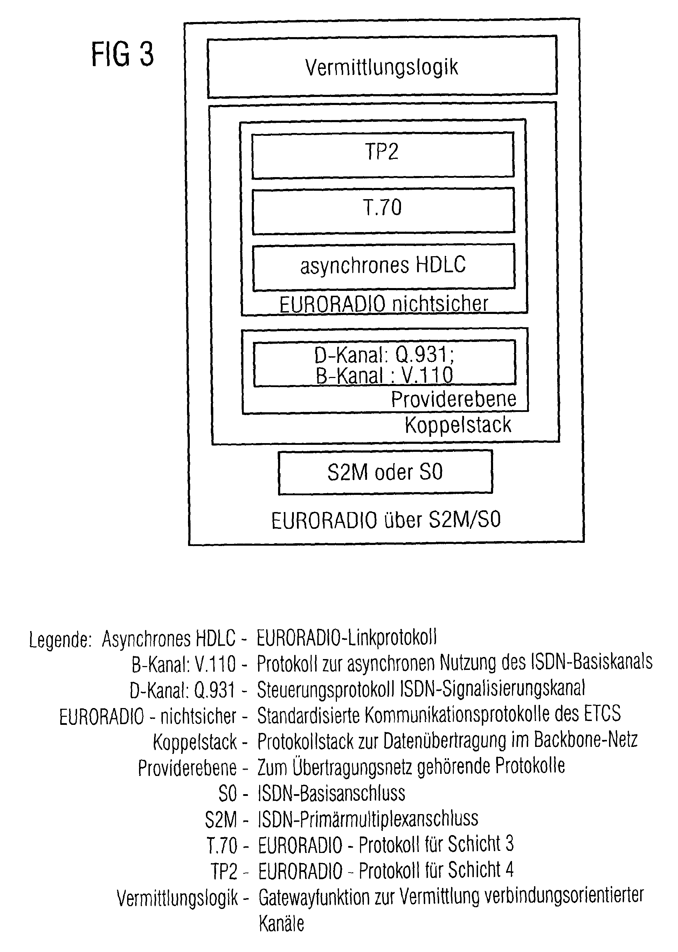

Figur 3: EURORADIO über S2M/S0 (Typ A),

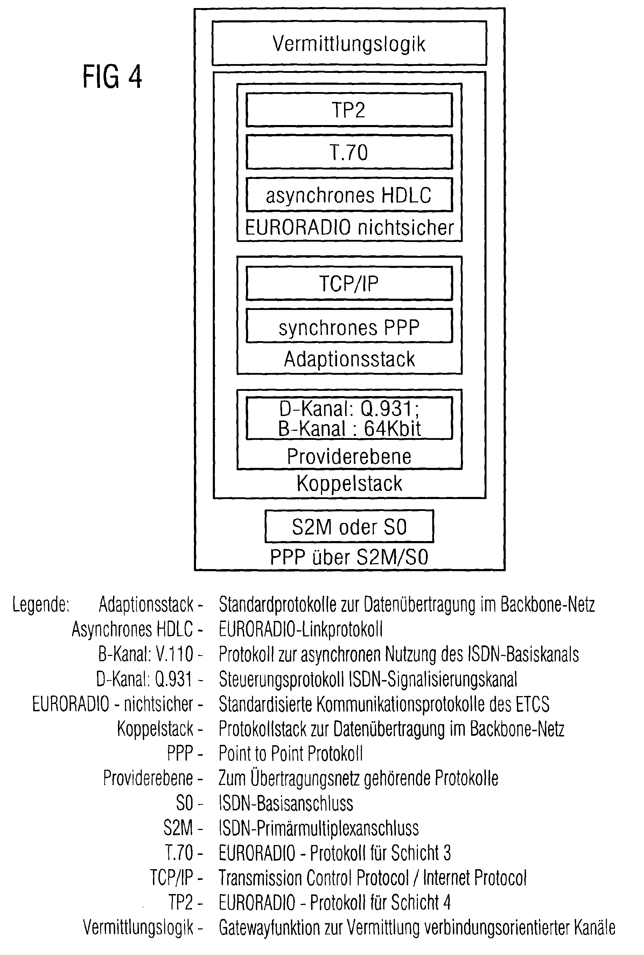

Figur 4: EURORADIO über TCP/IP, PPP und S2M/SO (Typ B) oder

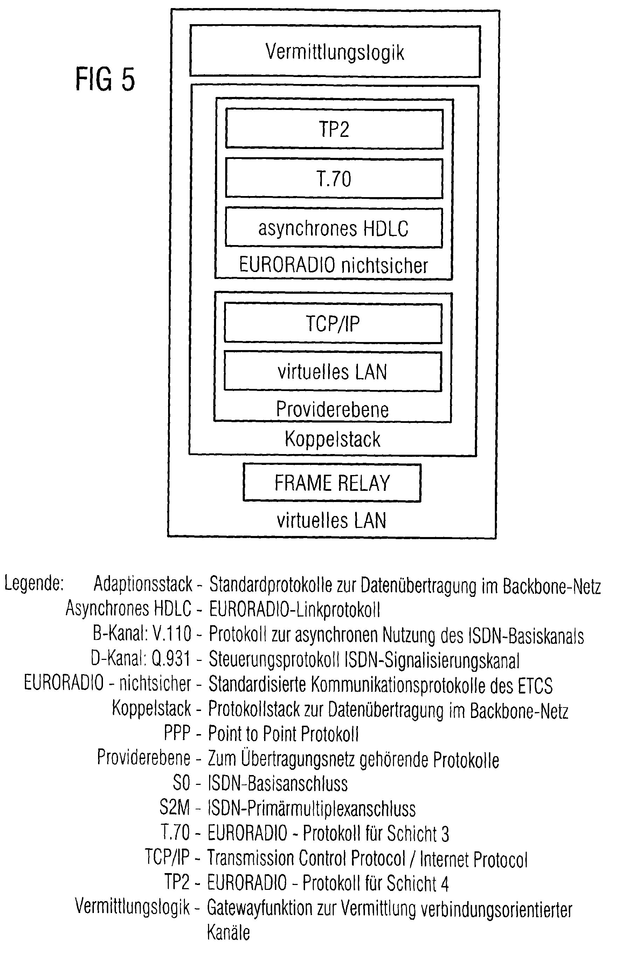

Figur 5: EURORADIO über TCP/IP und virtuelles LAN (Typ C).

Die Erfindung beschränkt sich nicht auf das vorstehend angegebene Ausführungsbeispiel. Vielmehr ist eine Anzahl von Varianten denkbar, welche auch bei grundsätzlich anders gearteter Ausführung von den Merkmalen der Erfindung Gebrauch machen.

## Patentansprüche

1. Verfahren zur Datenübertragung über ein Funknetz (1) und ein mit dem Funknetz (1) über ein Gateway (2) verbundenes Backbonenetz (5), wobei mobile und ortsfeste Teilnehmer (6 und 4) Daten über das Funknetz (1) und das Backbonenetz (5) übertragen,
**dadurch gekennzeichnet,**
**dass** die Übertragung im Funknetz (1) konform zu einem vorgegebenen Protokollstandard erfolgt und die verwendeten Übertragungsprotokollstacks im Funknetz (1) und im Backbonenetz (5) unterschiedlich sein können.

2. Verfahren nach Anspruch 1,
**dadurch gekennzeichnet,**
**dass** für die Kopplung des verwendeten Funk- und Backbonenetzes (1 und 5) ein oder mehrere Gateways (2) eingesetzt werden, die die Übertragungsprotokollstacks im Funknetz (1) und Backbonenetz (5) protokolltechnisch entkoppeln und die Adressierungsinformationen normkonform routen.

3. Verfahren nach Anspruch 1 oder 2,
**dadurch gekennzeichnet,**
**dass** bei mobilen Teilnehmern (6) ein definierter normkonformer Übertragungsprotokollstack zur Anwendung kommt, mit dem die Daten von und zu ortsfesten Teilnehmern (4) an ein Gateway (2) übertragen werden.

4. Verfahren nach Anspruch 1 oder 2,
**dadurch gekennzeichnet,**
**dass** bei ortsfesten Teilnehmern (4) verschiedene alternative Übertragungsprotokollstacks eingesetzt werden können, mit denen Daten von und zu mobilen Teilnehmern (6) an ein Gateway (2) übertragen werden.

5. Verfahren nach einem der vorangehenden Ansprüche,
**dadurch gekennzeichnet,**
**dass** in Gateways (2) sowohl normkonforme Übertragungsprotokollstacks zur Kommunikation mit mobilen Teilnehmern (6) als auch alternative Übertragungsprotokollstacks zur Kommunikation mit ortsfesten Teilnehmern (4) eingesetzt werden können.

6. Verfahren nach einem der vorangehenden Ansprüche,
**dadurch gekennzeichnet,**
**dass** Übertragungsprotokollstacks im Backbonenetz (5) normkonforme Übertragungsprotokolle enthalten müssen und zusätzliche Provider-Protokolle zur Anpassung an das Backbonenetz (5) enthalten können.

7. Verfahren nach Anspruch 6,
**dadurch gekennzeichnet,**
**dass** die verwendbaren Provider-Protokolle, Backbonenetze (5) und Schnittstellen zu den Backbonenetzen (5) nicht der zugrundeliegenden Norm der normkonformen Übertragungsprotokollstacks entsprechen müssen und damit variabel sind.

8. Verfahren nach Anspruch 6 oder 7,
**dadurch gekennzeichnet,**
**dass** die Übertragungskprotokollstacks im Backbonenetz (5) für die in den mobilen und ortsfesten Teilnehmern (6 und 4) Ende zu Ende ablaufenden Sicherungsverfahren und Applikationsfunktionen transparent sind.

9. Verfahren nach einem der vorangehenden Ansprüche,
**dadurch gekennzeichnet,**
**dass** die Interoperabilität der Datenübertragung gemäß den Protokollen des eingesetzten normkonformen Übertragungsprotokollstacks erhalten bleibt.

10. Verfahren nach einem der vorangehenden Ansprüche,
**gekennzeichnet durch**
die Verwendung für Zugsteuerungssysteme im Bereich der Bahnkommunikation.
